(19) Europäisches Patentamt
European Patent Office
Office européen des brevets

(11) **EP 1 597 548 B1**

(12) **EUROPÄISCHE PATENTSCHRIFT**

(45) Veröffentlichungstag und Bekanntmachung des Hinweises auf die Patenterteilung:
**20.11.2019 Patentblatt 2019/47**

(51) Int Cl.:
*G01J 3/18* (2006.01)     *G02B 5/18* (2006.01)

(21) Anmeldenummer: **04703091.1**

(22) Anmeldetag: **17.01.2004**

(86) Internationale Anmeldenummer:
**PCT/DE2004/000058**

(87) Internationale Veröffentlichungsnummer:
**WO 2004/076996 (10.09.2004 Gazette 2004/37)**

(54) **VERFAHREN ZUR ERMITTLUNG OPTIMALER GITTERPARAMETER FÜR DIE HERSTELLUNG EINES BEUGUNGSGITTERS FÜR EIN VUV-SPEKTROMETER**

METHOD FOR DETERMINING OPTIMUM GRATING PARAMETERS FOR PRODUCING A DIFFRACTION GRATING FOR A VUV SPECTROMETER

PROCEDE POUR DETERMINER DES PARAMETRES DE RESEAU OPTIMAUX POUR LA PRODUCTION D'UN RESEAU DE DIFFRACTION DESTINE A UN SPECTROMETRE VUV

(84) Benannte Vertragsstaaten:
**AT BE BG CH CY CZ DE DK EE ES FI FR GB GR HU IE IT LI LU MC NL PT RO SE SI SK TR**

(30) Priorität: **25.02.2003 DE 10307884**

(43) Veröffentlichungstag der Anmeldung:
**23.11.2005 Patentblatt 2005/47**

(73) Patentinhaber: **The European Atomic Energy Community (EURATOM),
represented by the European Commission
1049 Brussels (BE)**

(72) Erfinder: **BIEL, Wolfgang
52428 Jülich (DE)**

(74) Vertreter: **Gevers Patents
Intellectual Property House
Holidaystraat 5
1831 Diegem (BE)**

(56) Entgegenhaltungen:
• HAGELSTEIN P L: "NEARLY STIGMATIC TOROIDAL GRAZING-INCIDENCE SPECTROMETER IN THE 100-300-A RANGE: DESIGN" APPLIED OPTICS, OPTICAL SOCIETY OF AMERICA,WASHINGTON, US, Bd. 31, Nr. 10, 1. April 1992 (1992-04-01), Seiten 1464-1471, XP000263965 ISSN: 0003-6935
• MCKINNEY AND C PALMER W R: "Numerical design method for aberration-reduced concave grating spectrometers" APPLIED OPTICS, OPTICAL SOCIETY OF AMERICA,WASHINGTON, US, Bd. 26, Nr. 15, 1. August 1987 (1987-08-01), Seiten 3108-3118, XP002104946 ISSN: 0003-6935
• WILKINSON E ET AL: "TECHNIQUE FOR NARROW-BAND IMAGING IN THE FAR ULTRAVIOLET BASED ON ABERRATION-CORRECTED HOLOGRAPHIC GRATINGS" APPLIED OPTICS, OPTICAL SOCIETY OF AMERICA,WASHINGTON, US, Bd. 40, Nr. 19, 1. Juli 2001 (2001-07-01), Seiten 3244-3255, XP001100249 ISSN: 0003-6935
• KOIKE AND K OHKUBO M: "Holographic concave gratings for use with an off-plane constant-deviation monochromator" APPLIED OPTICS, OPTICAL SOCIETY OF AMERICA,WASHINGTON, US, Bd. 25, Nr. 22, 15. November 1986 (1986-11-15), Seiten 4071-4075, XP002104945 ISSN: 0003-6935

EP 1 597 548 B1

## Beschreibung

Die Erfindung betrifft ein Verfahren zur Bestimmung der optimalen Gitterparameter für ein holographisches Beugungsgitter, insbesondere für ein Beugungsgitter für ein VUV-Spektrometer mit einem ebenen Detektor.

## Stand der Technik

### 1. VUV-Spektrometer und Gittertechnologie

Alle Elemente und ihre (nicht vollständig ionisierten) Ionen können anhand ihrer charakteristischen Linienstrahlung eindeutig identifiziert und unterschieden werden. Zur Messung dieser Strahlung verwendet man heute üblicherweise Spektrometer, die die Strahlung durch Beugung an einem Beugungsgitter spektral zerlegen und die auf einem Detektor abgebildeten Spektren (Intensität als Funktion der Wellenlänge) aufzeichnen.

Die intensivsten Resonanzlinien der meisten Elemente und praktisch aller Ionen liegen im Vakuum-Ultravioletten Wellenlängenbereich (VUV, etwa 1 nm bis etwa 200 nm). Die Strahlung wird in diesem Wellenlängenbereich von Materie absorbiert, ferner nimmt die Reflektivität aller Materialien in diesem Bereich mit der Wellenlänge stark ab. Deshalb müssen Spektrometer im VUV-Bereich unter Vakuum betrieben werden und müssen mit nur einem einzigen optischen Bauteil auskommen, um eine ausreichende Transmission/Effizienz zum Nachweis der Strahlung zu gewährleisten. Die Entwicklung der Detektortechnik (MCP- Detektoren, lineare Arrays oder CCD-Chips) gibt zudem vor, dass das aufzuzeichnende Spektrum auf einer ebenen Fläche einer Größe von typischerweise 25-40 mm Breite scharf abgebildet werden muss.

VUV-Spektrometer bestehen daher heute üblicherweise aus den drei optischen Elementen Eintrittsspalt (ein länglicher Schlitz mit zwei scharfen und präzisen Kanten im Abstand von einigen 10 $\mu$m), abbildendes Beugungsgitter und (ebener) Detektor. Für die zweifache Aufgabenstellung der spektralen Zerlegung sowie der optischen Abbildung auf den Detektor gelangen Beugungsgitter als Reflexionsgitter mit konkaven oder toroidalen Oberflächen zum Einsatz. Zur Herstellung dieser Gitter gibt es zwei bewährte Verfahren:

A) Mechanisches Einritzen der Gitterstriche in das Substrat mittels einer Diamant-Spitze.

B) Holographische Beleuchtung einer dünnen Schicht eines Photo-Resists auf dem Substrat mittels Laserlicht von zwei Punkten aus. Die Gitterstriche entstehen als Interferenzmuster auf dem Substrat und werden nach der Belichtung nasschemisch sowie durch Ionen-Ätztechnik weiter ausgearbeitet.

Bei der Verwendung von abbildenden Beugungsgittern im VUV-Bereich treten Abbildungsfehler auf, d. h. ein Punkt im Eintrittsspalt wird durch das Gitter auf ein mehr oder weniger großes Gebiet (und nicht auf einen Punkt) am Detektor abgebildet. Hierdurch verschlechtern sich das Auflösungsvermögen und die Effizienz des Spektrometers. Der Stand der Technik hierzu ist wie folgt:
Bis etwa zum Jahre 1970 konnten Gitter nur nach Methode A) und mit konkaven Substraten hergestellt werden, mit geraden und parallelen Gitterstrichen (klassisches Rowland-Gitter). Dies führt z. B. zu Spektrometerkonfigurationen, bei denen das Spektrum entlang eines Kreises (auf dem "Rowland-Kreis ") entsteht. Die Verwendung ebener Detektoren führt daher zu Unschärfen in der Abbildung. Ferner treten erhebliche Lichtverluste (typischer Faktor 2-10) durch den Astigmatismus der Abbildung auf. Geritzte Gitter haben außerdem einen hohen Level an Streulicht wegen der nicht perfekt gleichmäßig ausgebildeten Gitterstriche. Zur Beschreibung eines Rowland-Gitters genügt die Angabe zweier Zahlen: Der Krümmungsradius des Substrates und die "Gitterkonstante" (Anzahl der Striche pro mm).

Seit etwa 1970 wird zunehmend Technik B) verwendet. Ein Verfahren zur Herstellung von Beugungsgittern ist beispielsweise aus DE 19 67 039 bekannt. Bei symmetrischer Beleuchtung aus großem Abstand kann man fast parallele Gitterstriche konstanten Abstands herstellen. Dies entspricht dem klassischen Rowland-Gitter mit seinen Abbildungsfehlern. Allerdings sind holographisch hergestellte Gitter erheblich streulichtärmer als mechanisch geritzte Gitter, weil die Gitterstriche gleichmäßiger als beim mechanischen Ritzen gefertigt werden können. Durch Variation von Abstand und Einfallswinkel beider holographischer Belichtungspunkte kann man einen variablen Abstand sowie eine Krümmung der Gitterstriche auf dem Substrat erreichen, durch den die Abbildungsfehler des Gitters verringert werden können. Insbesondere kann damit eine scharfe Abbildung auf einen ebenen Detektor erreicht werden und die Lichtverluste durch den Astigmatismus können weitgehend vermieden werden.

Verschiedene Konzepte zur Minimierung der Abbildungsfehler wurden seit etwa 1970 entwickelt und z. B. als "type 1" bis "type 4" aberration-corrected bezeichnet (Firma Jobin- Yvon). Die Methode kann bei konkaven und toroidalen Substraten angewendet werden. Der Streulicht-Level ist gering. Ein solches korrigiertes Gitter kann jedoch nur für eine bestimmte Spektrometerkonfiguration (Abstände, Winkel, Wellenlängenbereich) verwendet werden.

Ein holographisches Gitter wird in der Regel durch 7 Zahlenwerte (holographische Gitterparameter) beschrieben: Die beiden Krümmungsradien des Substrates $\rho$ und **R**, die verwendete Laserwellenlänge $\lambda_L$ und je 2 Koordinaten zur Beschreibung der Lage der beiden Lichtpunkte (z. B. Abstände **$r_C$, $r_D$** und Einfallswinkel $\gamma$ und $\delta$).

In den 80er Jahren wurden Versuche mit computergesteuerten Ritzmaschinen durchgeführt, bei denen mechanisch geritzte Gitter mit gekrümmten Gitterstrichen variablen Abstands hergestellt wurden. Diese Technik hat sich jedoch, bedingt durch hohe Kosten sowie das Streulichtproblem dieser Gitter, nicht durchgesetzt.

Da die VUV-Spektroskopie technisch aufwendig ist und nur bei speziellen Fragestellungen eingesetzt wird, gibt es folglich weltweit nur eine kleine Anzahl von Firmen, die auf dem Gebiet arbeiten, ferner gibt es nur eine sehr begrenzte Anzahl von standardmäßig lieferbaren Gittern und Spektrometern sowie einen ebenfalls sehr begrenzten Markt an Sonderentwicklungen.

Die Technologie zur Herstellung holographischer Gitter ist bei mindestens zwei Firmen (Jobin-Yvon und Zeiss) vorhanden. Für die Detektion der Strahlung bei Spektrometern im VUV-Bereich werden heute meist offene MCP-Detektoren eingesetzt. Diese wandeln die VUV-Photonen in freie Elektronen um, verstärken diese und wandeln die Elektronenpulse schließlich an einem Phosphor-Screen in sichtbares Licht um, welches dann mit einem geeigneten Kamerasystem aufgezeichnet werden kann. MCP-Detektoren verfügen über eine endliche Ortsauflösung, d. h. jedes primärseitige Einzelelektronenereignis führt am Detektorausgang zu einem Lichtfleck endlicher Größe, der näherungsweise eine räumliche Intensitätsverteilung in Form einer Gauss-Glocke der Breite von etwa 50-80 $\mu$m hat.

Neuere Präzisionsmessungen zu den MCP-Eigenschaften, die im Rahmen der Entwicklung von spektroskopischen Instrumenten für Satelliten durchgeführt wurden, erlauben jetzt eine weitergehende Optimierung der Effizienz des Gesamtsystems VUV-Spektrometer. Hierzu wird der Einbauwinkel der MCP im Spektrometer so gewählt, dass der lokale Einfallswinkel der VUV-Strahlung auf die MCP-Oberfläche gerade im Maximum der winkelabhängigen Nachweiseffizienz des Detektors liegt. Lage und Einbauwinkel des Detektors gehören zu den Spektrometerparametern und müssen als Eingangsgrößen bei der Bestimmung des Gitterdesigns berücksichtigt werden.

Die VUV-Spektrometer sollen eine hohe Effizienz aufweisen, um Untersuchungen mit hoher Zeitauflösung zu ermöglichen, gleichzeitig aber eine gute Wellenlängenauflösung besitzen, damit viele Spektrallinien gleichzeitig isoliert beobachtet werden können. Die Effizienz ergibt sich aus dem Produkt aus effektiver Etendue und Gittereffizienz (dies ist der Bruchteil des einfallenden Lichts, der in die erste Beugungsordnung abgelenkt wird). Die effektive Etendue ist das Produkt dreier Größen: Ausgeleuchtete Fläche des Eintrittsspalts; ausgeleuchteter Raumwinkel; Anteil der vom Gitter kommenden Strahlen, die den Detektor innerhalb seiner sensitiven Fläche treffen.

## 2. VUV-Spektroskopie an Fusionsexperimenten

Technische Anwendung findet die VUV-Spektroskopie im Rahmen von Fusionsexperimenten. Auf dem Weg zur kommerziellen Nutzung der Kernfusion werden weltweit Experimente mit magnetisch eingeschlossenen Wasserstoffplasmen durchgeführt, mit dem Ziel, das Produkt aus Teilchendichte, Temperatur und Einschlusszeit zu maximieren. In diesen heißen Plasmen mit Dichten oberhalb von $10^{19}$ m$^{-3}$ und Temperaturen im Bereich von einigen keV treten stets neben den Wasserstoffisotopen auch andere Elemente (Plasmaverunreinigungen) mit Konzentrationen im Promilleoder Prozent-Bereich auf, die z. B. als Wandbestandteile durch den unvermeidlichen Plasma-Wand-Kontakt freigesetzt werden und ins Plasma gelangen. Die Plasmaverunreinigungen können die Plasmaeigenschaften wesentlich beeinflussen: Einerseits verdrängen sie die Wasserstoffionen aus dem (quasineutralen) Plasma und "verdünnen" damit den "Fusionsbrennstoff", andererseits strahlen sie große Leistungsdichten ab und führen so zu einer Abkühlung des Plasmas, welche im Plasmazentrum unerwünscht ist, jedoch am Plasmarand zu positiven Effekten (z. B. gleichmäßigere Leistungsauskopplung) führen kann. Für die Optimierung des Fusionsplasmas ist daher eine genaue Kenntnis des Verunreinigungsgehaltes im Plasma sowie des Transportverhaltens der Plasmaverunreinigungen erforderlich.

Eine wichtige Diagnostik zur Identifizierung der Plasmaverunreinigungen ist die Spektroskopie, denn alle chemischen Elemente und ihre (nicht vollständig ionisierten) Ionen können anhand ihrer charakteristischen Linienstrahlung eindeutig unterschieden werden. Unter den oben genannten Plasmabedingungen an magnetisch eingeschlossenen Fusionsplasmen liegen die intensivsten Resonanzlinien der meisten Elemente und praktisch aller Ionen im vakuumultravioletten Wellenlängenbereich (VUV, etwa 1 nm bis etwa 200 nm). Um alle relevanten Plasmaverunreinigungen sicher erkennen zu können, ist eine permanente und umfassende Beobachtung eines großen Wellenlängenbereiches mit guter Wellenlängenauflösung erforderlich, um möglichst viele verschiedene Spektrallinien gleichzeitig messen und unterscheiden zu können.

Zur Bestimmung des Transportverhaltens der Plasmaverunreinigungen werden üblicherweise transiente Experimente durchgeführt, bei denen ein zeitlich kurzer Puls einer Plasmaverunreinigung zusätzlich ins Plasma eingebracht wird und das Vordringen der Teilchen vom Plasmarand zum Plasmazentrum spektroskopisch beobachtet wird. Für solche Untersuchungen werden Spektrometer benötigt, die eine hohe Zeitauflösung aufweisen. Dies stellt einerseits Anforderungen an die Detektortechnik, andererseits werden effiziente Spektrometer benötigt, welche eine genügende Anzahl von Photonen pro Spektrallinie und pro Zeitschritt erfassen und somit eine ausreichende Messgenauigkeit (abhängig von Zahl der erfassten Photonen, z. B. Poisson-Statistik) erreichen.

In "Nearly stigmatic toroidal grazing-incidence spectrometer in the 100-300 Å range: design" von P. L. Hagelstein, Applied Optics, Optical Society of America, Washington, US, Bd. 31, Nr. 10, 1. April 1992, Seiten 1464-1471, werden Berechnungen und Überlegungen zur holographischen Herstellung eines toroidalen Beugungsgitters offenbart. Es wird aber weder ein Verfahren zur Ermittlung von Gitterparametern noch die Bestimmung der Belichtungsgeometrie naher erläutert.

In "Numerical design method for aberration-reduced concave grating spectrometers" von W. R. McKinney et al., Applied Optics, Optical Society of America, Washington, US, Bd. 26, Nr. 15, 1. August 1987, Seiten 3108-3118, wird eine allgemeine Methode zur Herstellung eines konkaven Beugungsgitters offenbart. Auch hier wird kein Minimierverfahren zur Ermittlung von optimalen Gitterparametern erwähnt.

S. Singh beschreibt in "Diffraction gratings: aberrations and applications" in OPTICS AND LASER TECHNOLOGY, Elsevier Science Publishers BV., Amsterdam, NL, Bd. 31, Nr. 3, April 1999 auf den Seiten 195 bis 218 klassische und holographische Gitter und ihre Eigenschaften und Anwendungen.

Wilkinson et al. offenbart in " Technique for narrowband imaging in the far ultraviolet based on aberration-corrected holographic gratings", in Applied Optics, Optical Society of America, Washington, US, Bd. 40, Nr. 19, 1. Juli 2001, Seiten 3244-3255 ein Verfahren zur Ermittlung von Gitterparametern, welches auf einer Reihenentwicklung basiert, und als ebene Gitter für eine astronomisches Teleskop eingesetzt wird.

In "Holographic concave gratings for use with an offplane constant-deviation monochromator" in Applied Optics, Optical Society of America, Washington, US, Bd. 25, Nr. 22, 15. November 1986, Seiten 4071-4075 wird von K. Koike und M. Ohkubo Konkavgitter für einen Monochromator beschrieben. Die darin offenbarte Methode zur Ermittlung von Gitterparametern beruht ebenfalls auf einer Reihenentwicklung.

## Aufgabe und Lösung

Aufgabe der Erfindung ist es, ein holographisches Beugungsgitter zu schaffen, welches in einem VUV-Spektrometer mit einem ebenen Detektor eingesetzt, für einen vorgegebenen Wellenlängenbereich, insbesondere von 2,5 nm bis 160 nm, eine minimale Linienbreite am Detektor bei hoher Etendue erzielt.

Die Aufgabe der Erfindung wird einerseits gelöst durch ein Verfahren zur Bestimmung von Gitterparametern für die holographische Herstellung eines toroidalen Beugungsgitters gemäß Hauptanspruch. Die Aufgabe der Erfindung wird weiter durch ein Verfahren zur Herstellung eines Beugungsgitter gemäß den Nebenansprüchen gelöst, dessen Herstellungsparameter durch das vorgenannte Verfahren ermittelt werden. Vorteilhafte Ausführungsformen, sowohl des Verfahrens als auch des Beugungsgitters finden sich in den entsprechend rückbezogenen Ansprüchen wieder.

## Gegenstand der Erfindung

Gegenstand der Erfindung ist insbesondere ein Verfahren zur Ermittlung und Bestimmung von Gitterparametern, mit dessen Hilfe vorteilhafte Beugungsgitter für ein VUV-Spektrometer mit einem ebenen Detektor und vorgegebenen Spektrometerparametern hergestellt werden können, die gegenüber dem Stand der Technik deutlich verbesserte, insbesondere minimale Linienbreiten am Detektor bei einer hohen Etendue aufweisen.

Es wurde im Rahmen der Erfindung gefunden, dass zur Lösung der Aufgabe die mittlere Linienbreite der "Spektrallinien" auf der Detektorebene zu minimieren ist. Die Variablen, bezüglich derer das Minimum gesucht wird, sind die folgenden sieben Gitterparameter: Kleiner und großer Radius des toroidalen Gittersubstrates, die Abstände der holographischen Beleuchtungspunkte vom Gitterursprung, die Winkelstellung der holographischen Beleuchtungspunkte zur Gitternormalen und die vorgegebenen Laserwellenlänge für die holographische Beleuchtung. Als Randbedingungen werden sogenannte Spektrometerparameter, wie beispielsweise Abmessungen des Eintrittsspaltes und des Detektors, Abstände des Eintrittsspaltes und des Detektors vom Gittermittelpunkt, Ein- und Ausfallswinkel der Strahlung zur Gitternormalen und der zu untersuchende Wellenlängenbereich zunächst vorgegeben. Diese werden im weiteren Verfahren jedoch innerhalb entsprechender Bandbreiten, die sich aus mechanischen und/oder physikalischen Gegebenheiten herleiten lassen, ebenfalls leicht variiert.

Zur Lösung der Aufgabe, für einen vorgegebenen Wellenlängenbereich, welcher in der Regel durch eine physikalische Messaufgabe bestimmt ist, ein VUV-Spektrometer mit MCP-Detektor zu schaffen, ist zunächst das Design des Beugungsgitters-Spektrometers zur Verfügung zu stellen, das für einen bestimmten Wellenlängenbereich eine minimale Linienbreite bei gleichzeitig maximaler Gesamteffizienz erreicht. Die benötigte Gesamteffizienz ergibt sich beispielsweise aus der erwarteten Strahlungsintensität des Messobjektes Fusionsplasma und der angestrebten Messgenauigkeit.

Die zu lösenden Teilaufgaben sind erstens die Bestimmung eines optimalen Gitterdesigns, zweitens die Bestimmung der optimalen Winkelstellung des Detektors und drittens die Bestimmung der zugehörigen Gesamtanordnung (Spektrometerparameter). Da die zweite Teilaufgabe von der Lösung der ersten und dritten abhängt, wird die Gesamtaufgabe iterativ gelöst.

Physikalische und technische Randbedingungen

I) Einerseits sollte die Strichdichte des Beugungsgitters einen Wert von 2000-2500 pro mm nicht überschreiten, da dies bislang die technische Grenze des Herstellungsprozesses ist. Andererseits sollte ein Wert von einigen hundert auch nicht unterschritten werden, da andernfalls die physikalischen Grenzen des Beugungsvorgangs erreicht werden.

II) Es gibt mehrere Randbedingungen für die Wahl des Einfallswinkels $\alpha$ der Strahlung auf das Beugungsgitter:

- Die Reflektivität der Gitteroberfläche und damit die Beugungseffizienz des Gitters sind winkel- und wellenlängenabhängig. Die untere Grenzwellenlänge, unterhalb derer die Reflektivität verschwindet und völlige Absorption auftritt, ist etwa proportional zum Cosinus des Einfallswinkels $\alpha$ zur Gitternormalen:
$\lambda_{Grenz} \approx \lambda_P$ x cos $(\alpha)$ mit $\lambda_P \approx 15$ nm für Gold oder Platin.
Zur Erzielung einer ausreichend großen Reflektivität am unteren Rand des gewählten Wellenlängenbereiches muss praktisch ein Einfallswinkel gewählt werden, dessen zugehörige Grenzwellenlänge mindestens einen Faktor 2,5 kleiner als die minimale Wellenlänge $\lambda_{min}$ des Spektrometers ist.

- Gleichzeitig nimmt aber die Etendue und damit die Effizienz des Spektrometers bei streifendem Lichteinfall (wachsendem Winkel $\alpha$) ab, ebenfalls etwa proportional zum Cosinus des Einfalls-Winkels zur Gitternormalen. Aufgrund von Bedingung a) und b) werden für die hier beschriebenen Spektrometer Einfallswinkel gewählt, für

$$\alpha \approx \arccos\left(\frac{\lambda_{min}}{2.5 \times 15 \text{nm}}\right)$$

die die Bedingung                                    gilt.

- Einfallswinkel von mehr als 87 Grad führen zu extremen Krümmungsradien des Gittersubstrates und damit nachteilig zu vermehrten Abbildungsfehlern und wachsendem Streulicht. Dieser Winkelbereich wird daher von vorn herein ausgeschlossen. Damit ergibt sich insbesondere, dass der sinnvolle Anwendungsbereich dieses Spektrometerkonzepts auf Wellenlängen oberhalb von etwa 2 nm beschränkt ist.

III) Die Baugröße des Spektrometers soll möglichst begrenzt bleiben (Kostenfrage, mechanische Stabilität, Platzbedarf). Dies führt bei vorgegebenem Wellenlängenbereich über die Gittergleichung zu einer möglichst kurzen "Armlänge" (d. h. Abstand zwischen Gitter und Detektor) sowie zu einer hohen Strichdichte des Gitters. Hierbei ist aber Randbedingung I) zu beachten.

IV) Der Einbauwinkel des Detektors im Spektrometer sollte so gewählt werden, dass der lokale Einfallswinkel des gebeugten Lichts auf den Detektor dem Maximum der Nachweiseffizienz des MCP-Detektors entspricht.

V) Für den Belichtungsvorgang zur Herstellung eines holographischen Gitters werden optische Tische endlicher Größe verwendet, ferner haben die optischen Halterungen der Lochblenden, die als Punktlichtquellen bei der Belichtung zum Einsatz kommen, eine endliche Größe. Zudem kann eine gleichmäßige Ausleuchtung des Gittersubstrats nur erreicht werden, wenn der Einfallswinkel auf das Gitter nicht zu streifend gewählt wird. Aus diesen drei Bedingungen ergeben sich technische Grenzen für Mindest- und Maximalabstände sowie Maximalwinkel der Lochblendenpositionen bei der holographischen Belichtung.

Entwurf eines Beugungsgitters

Für die Entwicklung und Herstellung eines Beugungsgitters für ein Spektrometer ist die Ermittlung der Gitterparameter und die Randbedingungen nur jeweils Teilschritte. Das gesamte Verfahren kann dabei wie folgt dargestellt werden.

A) Vorgabe des zu beobachtenden Wellenlängenbereichs (minimale und maximale Wellenlänge in nm) sowie der Detektorgröße (Breite).

B) Wahl der Winkelstellung des Detektors. Randbedingung: Bei den im VUV-Bereich häufig verwendeten offenen MCP-Detektoren hängt die Detektoreffizienz stark von Wellenlänge und Einfallswinkel der Strahlung auf die Detektoroberfläche ab.

C) Wahl des Einfallswinkels der Strahlung auf das Beugungsgitter. Physikalische Randbedingungen:

- Die Reflektivität der Gitterbeschichtung hängt von Wellenlänge und Einfallswinkel ab.
- Ein stark streifender Einfall mit Einfallswinkeln von mehr als 87 Grad zur Gitternormalen führt zu extremen Krümmungsradien und ist daher für toroidale Gittersubstrate unüblich.

D) Wahl der "Armlängen" des Spektrometers (Abstand vom Eintrittsspalt zum Gittermittelpunkt sowie Abstand vom Gittermittelpunkt zum meridionalen Fokus nullter Ordnung).

E) Randbedingungen: Aus den Schritten A bis C sowie der Armlänge ergibt sich die Strichdichte des Gitters, hierbei darf ein Wert von 2000-2500 Strichen pro mm nicht überschritten werden. Eine große Armlänge führt zu einer kleineren Strichdichte, verteuert allerdings den mechanischen Aufbau des Spektrometers.

F) Numerische Erstellung eines Gitterdesigns (Bestimmung der sieben holographischen Gitterparameter). Dieser Punkt wird nachfolgend noch in den Absätzen zu F.1 bis F.8 ausführlicher beschrieben.

G) Numerische Analyse der Gittereigenschaften durch Ray-Tracing Berechnungen (Spot-Diagramme, Bestimmung von effektiver Etendue und Linienbreite). Für den so bestimmten Satz der sieben Gitterparameter und das damit festgelegte Spektrometer wird nun die Gesamt-Performance numerisch simuliert. Hierzu werden, wie unter Absatz F.7 beschrieben, zahlreiche Strahlengänge numerisch simuliert, diesmal allerdings für mehrere, insbesondere mindestens fünf verschiedene Wellenlängen bei homogener Ausleuchtung von Eintrittsspalt und Gitter mit beispielsweise je 50000 Einzelstrahlen. Hieraus ergeben sich die sogenannten Spotdiagramme am Detektor (Spaltbilder erster Ordnung) einschließlich der verbliebenen Abbildungsfehler sowie die Apparateprofile der Spektrallinien. Als Ergebnis erhält man die mittlere Linienbreite des Spektrometers sowie die effektive Etendue.

H) Wiederholung der Schritte (C bis G) für verschiedene Gitter- und Spaltabmessungen (Variation der Etendue) zur Bestimmung einer Konfiguration mit optimaler Linienbreite bei gegebener Etendue.

I) Gegebenenfalls Wiederholung der Schritte (C bis G) einschließlich F.3 bis F.8 für verschiedene Armlängen zur Bestimmung einer Konfiguration mit optimaler Linienbreite bei gegebener Etendue.

J) Berechnung der Gittereffizienz als Funktion der Wellenlänge durch einen Gitterhersteller (dies ist mit der hier entwickelten Software nicht möglich).

K) Gegebenenfalls Wiederholung der Schritte F.1c bis F.1g einschließlich (C bis G) für verschiedene Einfallswinkel zur Bestimmung einer Konfiguration mit optimaler Linienbreite bei gegebener Etendue.

L) Auswahl einer für die gegebene Anwendung optimalen Konfiguration, bestehend aus den 7 holographischen Gitterparametern sowie den Spektrometerparametern (Armlängen, Einfallswinkel, Gittergröße, Spaltgrösse, Detektorgröße)

Bestimmung des Gitterdesigns

Der vorgenannte Punkt F, die numerische Bestimmung des Gitterdesigns ist, mathematisch gesehen, eine Minimierungsaufgabe. Als " Randbedingungen" werden zunächst Anfangswerte der Spektrometerparameter (Abmessungen, Abstände, Winkel, Wellenlängenbereich) und die Laserwellenlänge vorgegeben. Zu minimieren ist die mittlere Linienbreite der "Spektrallinien" auf der Detektorebene. Die Variablen, bezüglich derer das Minimum gesucht wird, sind die sieben vorgenannten Gitterparameter. Nach der Bestimmung der Gitterparameter wird das Gesamtsystem (VUV-Spektrometer) hinsichtlich der erreichten Linienbreite und Effizienz mittels Ray-Tracing Berechnungen numerisch untersucht und die Einhaltung aller technischen Randbedingungen sowie deren optimale Ausnutzung überprüft. Dabei fließen auch Daten zur Beugungseffizienz des Gitters ein, welche u. a. von dem Gitterhersteller berechnet werden können. Die mehrfache Wiederholung des Vorgangs für unterschiedlich gewählte Spektrometerparameter führt schließlich für die gestellte Problematik (z. B. vorgegebener Wellenlängenbereich und/oder weitere geometrische Vorgaben) zu einer optimalen Lösung.

Für eine vorgegebene Problematik lassen sich die einzelnen Verfahrensschritte für die Ermittlung der sieben dafür optimalen Gitterparameter (Punkt F) vorzugsweise wie folgt beschreiben.

F.1) Vorgabe der Spektrometerparameter, soweit nicht durch die Punkte A bis D schon vorgegeben, insbesondere:

F.1)a) Vorgabe des zu beobachtenden Wellenlängenbereichs (minimale und maximale Wellenlänge in nm, die auf den Detektor abgebildet werden soll), die aufgrund der physikalischen Messaufgabe vorgegeben ist.

F.1)b) Vorgabe der Höhe und Breite des Detektors (z. B. Standardgrößen). Diese Vorgabe erfolgt beispielsweise anhand der verfügbaren Detektortechnik.

F.1)c) Vorgabe des Einfallswinkels $\alpha$ des Lichts bezogen auf die Gitternormale: Dabei ist insbesondere die Randbedingung II zu beachten.

F.1)d) Winkelstellung ("MCP angle") des Detektors: Siehe Randbedingung IV. Die Winkelstellung des Detektors wird vorzugsweise iterativ bestimmt, da der genaue Einfallswinkel der Strahlung auf den Detektor auch von den Gitterparametern abhängt.

F.1)e) Vorgabe des Abstands $L_A$ vom Eintrittsspalt zum Gittermittelpunkt und des Abstands $r_{S0}$ vom Gittermittelpunkt zum meridionalen Fokus nullter Ordnung: Beide Abstände sind frei wählbar, solange Randbedingungen I und III eingehalten werden. Jedoch sollen beide Abstände vorteilhaft etwa gleich gewählt werden, um eine symmetrische Abbildung und minimale Abbildungsfehler zu erreichen.

F.1)f) Vorgabe der Breite und Höhe des Eintrittsspalts: Diese Werte sind im Prinzip frei wählbar. Bei Vergrößerung nimmt die Etendue zu und die Linienbreite verschlechtert (d. h. vergrößert) sich.

F.1)g) Vorgabe der Breite und Höhe des Beugungsgitters: Bei Vergrößerung des Beugungsgitters nimmt die Etendue zu, die Linienbreite verschlechtert (vergrößert) sich jedoch nachteilig und die Herstellungskosten steigen.

F.2) Es folgt die Vorgabe der Laserwellenlänge $\lambda_L$ für die holographische Belichtung des Gittersubstrates. Dieser Wert wird von Seiten des Gitterherstellers geliefert. Er ergibt sich aus der verfügbaren Lasertechnik und der Sensitivität des verwendeten Photo-Resists. Die Anzahl der noch zu suchenden Variablen reduziert sich damit auf 6.

F.3) Es wird der große Krümmungsradius R des Gittersubstrats aus der meridionalen Fokussierungsbedingung nullter Ordnung bestimmt. Die Anzahl der noch zu suchenden Variablen reduziert sich damit auf 5.

F.4) Es folgt die iterative Bestimmung der folgenden Größen:

Kleiner Krümmungsradius $\rho$ des Gittersubstrats, Strichdichte G am Gittermittelpunkt und Wellenlänge am Detektormittelpunkt. Verwendet werden die Gittergleichung sowie die saggitale Fokussierungsbedingung erster Ordnung. Die Anzahl der noch zu suchenden Variablen reduziert sich damit auf 4.

F.5) Weitere Vorgaben der Spektrometer sind die Lage und Winkelstellung des Detektors. Die Lage des Detektors lässt sich aus einer Geradengleichung bestimmen. Die Winkel lässt sich aus der Gittergleichung bestimmen, wobei das Licht erster Ordnung vom Gitter auf den Detektor fällt.

F. 6) Von den verbleibenden 4 Variablen (Abstände der beiden holographischen Belichtungspunkte vom Gittermittelpunkt sowie deren Winkelstellungen zur Gitternormalen) lässt sich einer der beiden Winkel (hier: $\Upsilon$) über die Kenntnis der mittleren Strichzahl des Gitters eliminieren .

Zur Lösung der Minimierungsaufgabe muss also ein Minimum einer Funktion von den drei verbleibenden Variablen (Abstände $r_C$, $r_D$ und Winkel $\delta$) bestimmt werden .

F. 7) Zur Lösung der Minimierungsaufgabe wird das Spektrometer in der Näherung geometrischer Optik numerisch simuliert. Für einen gegebenen Satz von $r_C$, $r_D$ und $\delta$ wird der Strahlenverlauf im Spektrometer für eine Anzahl von 5 Wellenlängen und hier jeweils für eine große Anzahl (mindestens einige 1000) von unterschiedlichen Strahlverläufen Verschiedene Startpunkte am Eintrittsspalt sowie jeweils verschiedene Auftreffpunkte auf das Gitter) numerisch verfolgt. Fur jeden Einzelstrahl wird der Auftreffpunkt am Detektor durch Anwendung des Fermatschen-Prinzips (Minimierung des Lichtwegs) bestimmt. Die zu minimierende GröBe ist die Linienbreite $\Delta\lambda$ am Detektor (gemittelt über alle Wellenlängen), die von der Lage aller berechneten Auftreffpunkte und von der Ortsauflösung des verwendeten Detektors abhängt. Zur Bestimmung der ausgangsseitigen Linienbreite wird für jeden Auftreffpunkt am Detektor eine Gauss'sche-Glockenkurve aufsummiert, deren Breite der Detektorauflösung entspricht. Durch Überlagerung aller Gausskurven ergibt sich die resultierende Intensitätsverteilung der Spektrallinien, die als Plot dargestellt werden kann. Die Linienbreite für eine Wellenlänge ergibt sich dann aus der Breite dieser Kurven am halben Maximalwert. Die zu minimierende Größe $\Delta\lambda$ ist der Mittelwert der Linienbreite über alle betrachteten Wellenlängen. Bei der Aufzeichnung der Spektren mit einer Kamera mit diskreten Pixeln ergeben sich diskrete Messwerte, die ebenfalls in die Plots eingetragen sind.

F. 8) Mittels einer iterativen Suchstrategie wird das gesamte Gebiet der drei Variablen ($r_C$, $r_D$ und $\delta$) nach einem Minimum der Größe $\Delta\lambda$ abgesucht. Dabei wird auf einem Raster vorgegebener Schrittweite auf der Ebene ($r_C$, $r_D$) für jedes Wertepaar ($r_C$, $r_D$) ein absolutes Minimum der Größe $\Delta\lambda$ hinsichtlich der Variablen $\delta$ bestimmt. Diese Minimumsbestimmung hinsichtlich $\delta$ an jeder Stelle ($r_C$, $r_D$) erfolgt so, dass zuerst der gesamte erlaubte Winkelbereich mit einem groben Raster abgesucht wird, um anschließend eine Feinbestimmung der genauen Minimumsposition mittels eines Newton-Verfahrens durchzuführen. Zur Begrenzung der Rechenzeit wird die gesamte Suche auf der Ebene ($r_C$, $r_D$) zuerst mit einem Grobraster (Schrittweite z. B. 20 mm) und dann in einem sukzessiv verkleinerten Suchgebiet mit einem Feinraster (z. B. feinste Schrittweite 1 mm) durchgeführt.

Am Ende wird der Satz von Variablen $r_C$, $r_D$ und $\delta$ als Lösung angesehen, für den $\Delta\lambda$ ein absolutes Minimum annimmt.

## Spezieller Beschreibungsteil

Nachfolgend wird der Gegenstand der Erfindung anhand von 7 Figuren, vier Ausführungsbeispielen sowie 5 Tabellen näher erläutert, ohne dass der Gegenstand der Erfindung dadurch beschränkt wird.
Es zeigen:

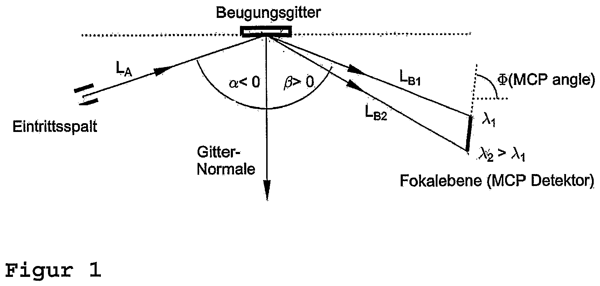

Figur 1:    Aufbau eines Spektrometers (von oben).

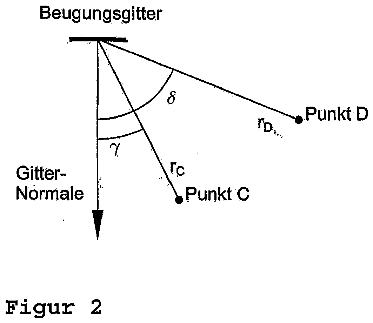

Figur 2:    Skizze zur holographischen Gitterbelichtung (von oben).

Figuren 3-6:    Simulierte Spektralverteilungen (Spot-Diagramme) und entsprechende instrumentelle Profile für vier verschiedene Wellenlängenbereiche sowie dazu korrespondierende Sätze an Gitterparametern.

Die Forschungszentrum Jülich GmbH beteiligt sich seit 1999 an der Entwicklung von Diagnostik für das neue Plasmaexperiment W7-X, das ca. 2008 in Greifswald in Betrieb gehen wird. Im Bereich der VUV -Spektroskopie sollten dabei Spektrometer entwickelt werden, die insgesamt den Wellenlängenbereich von 2,5 nm bis 160 nm lückenlos abdecken sollen.
Im Rahmen der hier verwendeten Technologie lässt sich eine weitere Vergrößerung des beobachteten Wellenlängenbereiches (bis etwa 1 nm bzw. bis etwa 200 nm) und/oder eine Steigerung der Auflösung grundsätzlich durch eine Vermehrung der Anzahl der Geräte bei entsprechend anderer Wahl der Wellenlängensegmente erreichen. Für den vorliegenden Fall stellte die Anzahl von 4 Spektrometern einen vertretbaren Kompromiss zwischen verfügbarem Budget und den an W7-X verfügbaren U-10 Beobachtungsstutzen dar.
Im Rahmen dieser Erfindung wurden folgende vier Spektrometer mit optimierten Beugungsgittern für vier gering überlappende Wellenlängenbereiche entwickelt:

Spektrometer Nr. 1: 2,5    bis 10,5 nm
Spektrometer Nr. 2: 9,0    bis 24,0 nm
Spektrometer Nr. 3: 20    bis 66 nm
Spektrometer Nr. 4: 60    bis 160 nm

Bei der Festlegung der Wellenlängenbereiche wurden die spektrale Lage wichtiger Spektrallinien sowie die Verfügbarkeit von Kalibriermethoden und -lichtquellen berücksichtigt. Die neuen Spektrometer sollen eine hohe Effizienz aufweisen, um Untersuchungen mit hoher Zeitauflösung zu ermöglichen, gleichzeitig aber eine gute Wellenlängenauflösung besitzen, damit viele Spektrallinien gleichzeitig isoliert beobachtet werden können. Die Gesamteffizienz des Spektrometers ergibt sich aus dem Produkt aus effektiver Etendue, Gittereffizienz (dies ist der Bruchteil des einfallenden Lichts, der in die erste Beugungsordnung abgelenkt wird) und der Nachweiseffizienz des Detektors. Die effektive Etendue ist das Produkt dreier Größen: Ausgeleuchtete Fläche des Eintrittsspalts; ausgeleuchteter Raumwinkel; Anteil der vom Gitter kommenden Strahlen, die den Detektor innerhalb seiner sensitiven Fläche treffen.
Derzeit existieren für eine solche Anwendung keine geeigneten Standardgitter. Gitterhersteller wie Jobin-Yvon/Horiba (führender Hersteller holographischer Gitter) oder Zeiss (Spezialist für verschiedene Sonderanfertigungen bei Optik, auch holographische Gitter) verfügen jedoch über die Technologie zur Herstellung holographischer Gitter, sofern die dazu erforderlichen Gitterparameter vorgegeben werden.
Dazu ist jedoch zunächst die Bestimmung der sieben Parameter eines holographischen Beugungsgitters für ein entsprechendes VUV-Spektrometer mit ebenem Detektor notwendig, so dass bei vorgegebenen Spektrometerparametern (Abmessungen, Abstände, Winkel, Wellenlängenbereich) eine minimale Linienbreite am Detektor (gemittelt über den Wellenlängenbereich) bei hoher Etendue (Lichtstärke) erzielt wird.
Geeignete Designs holographischer korrigierter Gitter für die zu entwickelnden Spektrometer stehen bei den Gitterherstellern regelmäßig nicht zur Verfügung.
Rowlandgitter für die genannten Wellenlängenbereiche sind teilweise verfügbar. Eine Verwendung solcher Gitter führt nachteilig zu Spektrometern, die eine erheblich geringere Etendue (Faktor 2 - 10) und eine schlechtere Auflösung aufweisen, als es mit korrigierten holographischen Gittern erreicht werden kann.
Es wurde im Rahmen der Erfindung gefunden, dass zur Lösung der Aufgabe die mittlere Linienbreite der "Spektrallinien" auf der Detektorebene zu minimieren ist. Die Variablen, bezüglich derer das Minimum gesucht wird, sind die sieben Gitterparameter. Als Randbedingungen werden die Spektrometerparameter, wie beispielsweise Abmessungen, Abstände, Winkel und Wellenlängenbereich zunächst vorgegeben. Diese werden im weiteren Verfahren jedoch innerhalb entsprechender Bandbreiten, die sich aus mechanischen und/oder physikalischen Gegebenheiten herleiten lassen, ebenfalls variiert.

Ausführungsbeispiele:

Nachfolgend werden die Ergebnisse von 4 Ausführungsbeispielen für neue Gitterdesigns dargestellt. Dabei gelten folgende Bezeichnungen:

A. Holographische Gitterparameter:

R: Großer Radius des toroidalen Gittersubstrates
$\rho$: Kleiner Radius des toroidalen Gittersubstrates
$r_c$, $r_d$: Abstände der holographischen Beleuchtungspunkte vom Gitterursprung
$\gamma$, $\delta$: Winkelstellung der holographischen Beleuchtungspunkte zur Gitternormalen
$\lambda_L$: Laserwellenlänge

B. Spektrometerparameter:

$L_A$: Abstand Eintrittsspalt -Gittermittelpunkt
$r_{so}$: Abstand vom Gitterursprung zum meridionalen Fokus nullter Ordnung
$L_B$: Abstand Gittermittelpunkt -Detektor
$\alpha$: Einfallswinkel der Strahlung zur Gitternormalen
$\beta$: Ausfallswinkel der Strahlung zur Gitternormalen
$\lambda$: Wellenlänge der Strahlung innerhalb eines zuvor definierten Wellenlängenbereichs
G: Strichdichte im Gitterursprung
MCP angle: Anstellwinkel des Detektors relativ zur Gittertangente
TH: Anteil der ausfallenden Strahlen, die den Detektor innerhalb eines vertikalen Bereichs vorgegebener Höhe treffen

Erläuterung zu den Gitterdesigns:

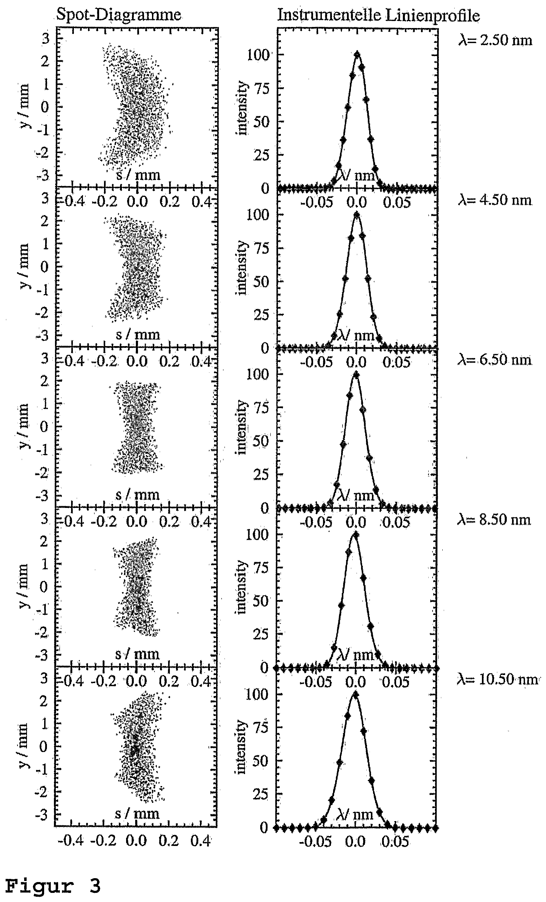

Design 1 ist für ein Spektrometer im Wellenlängenbereich von 2,5 nm bis 10,5 nm, Design 2 ist für ein Spektrometer im Wellenlängenbereich von 9,0 nm bis 24,0 nm, Design 3 ist für ein Spektrometer im Wellenlängenvon 20 nm bis 66 nm und Design 4 ist für ein Spektrometer im Wellenlängenbereich von 60 nm bis 160 nm bestimmt worden, wobei alle vier neuen Designs am Fusionsexperiment W7-X eingesetzt werden soll. In der nachfolgenden Beschreibung der vier Figuren 3 bis 6 sind alle Dimensionen in mm und alle Winkel in ° angegeben. Der Ursprung wurde in den Mittelpunkt des Beugungsgitters gelegt.

Tabelle 1 zu Parametern für die Figuren 3 bis 6:

| A. Gitterparameter | | Figur 3 | Figur 4 | Figur 5 | Figur 6 |
|---|---|---|---|---|---|
| großer Radius | R | 6451,0 | 1860 | 828,2 | 495,0 |
| kleiner Radius | $\rho$ | 52,0 | 132,8 | 165,7 | 264,2 |
| Abstände der Beleuchtungspunkte | $r_c$ | 328 | 327 | 337 | 362 |
| | $r_d$ | 1000 | 1000 | 1000 | 1000 |
| Winkelstellung der Beleuchtungspunkte | $\gamma$ | 4,74 | -2,65 | 19,60 | 32,60 |
| | $\delta$ | 75,0 | 75,0 | 75,0 | 75,0 |
| Laserwellenlänge | $\lambda_L$ | 487,98 | 487,98 | 487,98 | 487,98 |

(fortgesetzt)

| B. Spektrometerparameter | | Figur 3 | Figur 4 | Figur 5 | Figur 6 |
|---|---|---|---|---|---|
| Strichdichte | G | 1810,27 | 2074,07 | 1291,98 | 875,49 |
| Einfallswinkel der Strahlung | $\alpha$ | -86,0 | -76,0 | -65,0 | -45,0 |
| Ausfallwinkel der Strahlung | $\beta_1$ | 83,24 | 72,11 | 61,70 | 40,89 |
| | $\beta_2$ | 78,11 | 67,00 | 55,19 | 34,54 |
| Abstand: Eintrittsspalt-Gittermittelpunkt | $L_A$ | 450 | 450 | 350 | 350 |
| Abstand: Gitterursprung - meridionaler Fokus 0. Ordnung | $r_{s0}$ | 450 | 450 | 350 | 350 |
| Anstellwinkel Detektor | MCP | 79,2 | 71,1 | 62,7 | 47,9 |
| Abstand: Gittermittelpunkt - Detektor | $L_{B1}$ | 447,95 | 448,42 | 349,77 | 352,19 |
| | $L_{B2}$ | 446,91 | 449,50 | 352,74 | 359,27 |
| Spalthöhe | | 3,8 | 3,8 | 3,8 | 3,8 |
| Spaltbreite | | 0,22 | 0,12 | 0,06 | 0,06 |
| Gitterhöhe | | 4,5 | 8,0 | 9,0 | 9,0 |
| Gitterbreite | | 24 | 24 | 30 | 18 |
| Apertur | | 50 | 50 | 15 | 15 |

Tabelle 2 zu den Spotdiagrammen und instrumentellen Profilen für die Figur 3:

| Wellenlänge | 2,5 | 4,5 | 6,5 | 8,5 | 10,5 |
|---|---|---|---|---|---|
| optische Linienbreite | 0,0267 | 0,0261 | 0,0240 | 0,0238 | 0,0283 |
| Bandpass-Linienbreite | 0,0266 | 0,0262 | 0,0246 | 0,0250 | 0,0294 |
| Detektierte Linienbreite | 0,0285 | 0,0294 | 0,0290 | 0,0304 | 0,0355 |
| Etendue in $10^{-5}$ [mm$^2$ sr] | 2,8099 | 3,0091 | 3,1357 | 3,0730 | 2,9735 |
| Transmission | 0,20007 | 0,21425 | 0,22327 | 0,21880 | 0,21171 |
| Anteil der ausfallenden Strahlen, die den Detektor in vorgegebener Höhe treffen (TH) | 0,90455 | 0,96596 | 0,99894 | 0,98598 | 0,94938 |

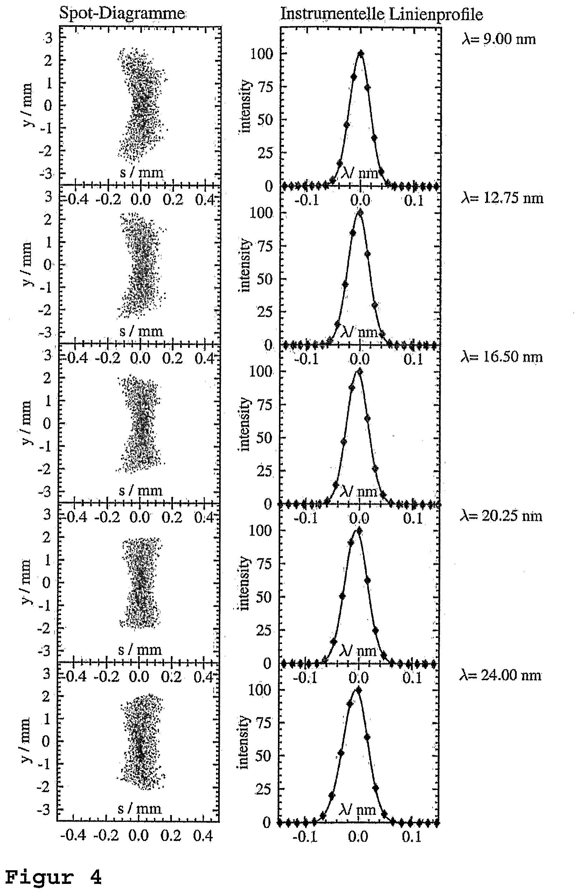

Tabelle 3 zu den Spotdiagrammen und instrumentellen Profilen für die Figur 4:

| Wellenlänge | 9,00 | 12,75 | 16,50 | 20,25 | 24,00 |
|---|---|---|---|---|---|
| optische Linienbreite | 0,0378 | 0,0372 | 0,0381 | 0,0398 | 0,0426 |
| Bandpass-Linienbreite | 0,0387 | 0,0386 | 0,0394 | 0,0416 | 0,0443 |
| Detektierte Linienbreite | 0,0454 | 0,0464 | 0,0479 | 0,0505 | 0,0546 |
| Etendue in $10^{-4}$ [mm$^2$ sr] | 0,97527 | 1,0125 | 1,0398 | 1,0541 | 1,0296 |
| Transmission | 0,37131 | 0,38547 | 0,39587 | 0,40133 | 0,39198 |
| Anteil der ausfallenden Strahlen, die den Detektor in vorgegebener Höhe treffen (TH) | 0,93350 | 0,96922 | 0,99293 | 1,0000 | 0,98658 |

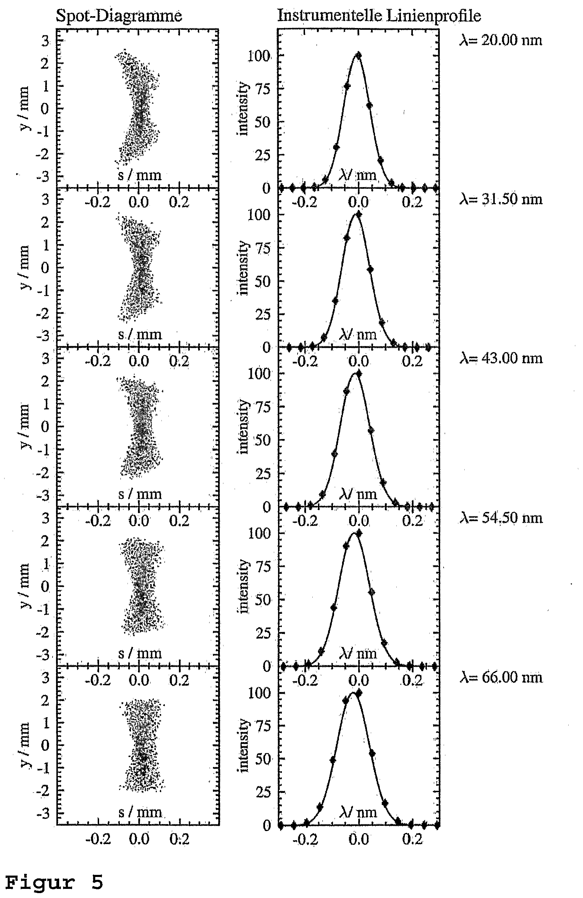

Tabelle 4 zu den Spotdiagrammen und instrumentellen Profilen für die Figur 5:

| Wellenlänge | 20,0 | 31,5 | 43,0 | 54,5 | 66,0 |
|---|---|---|---|---|---|
| optische Linienbreite | 0,0761 | 0,0799 | 0,0878 | 0,0933 | 0,0998 |
| Bandpass-Linienbreite | 0,0838 | 0,0895 | 0,0964 | 0,1017 | 0,1087 |
| Detektierte Linienbreite | 0,1136 | 0,1205 | 0,1284 | 0,1347 | 0,1414 |
| Etendue in $10^{-5}$ [mm$^2$ sr] | 1,9920 | 2,0524 | 2,0832 | 2,0993 | 2,1113 |
| Transmission | 0,49982 | 0,51498 | 0,52271 | 0,52674 | 0,52976 |
| Anteil der ausfallenden Strahlen, die den Detektor in vorgegebener Höhe treffen (TH) | 0,94072 | 0,96369 | 0,98110 | 0,99157 | 0,99695 |

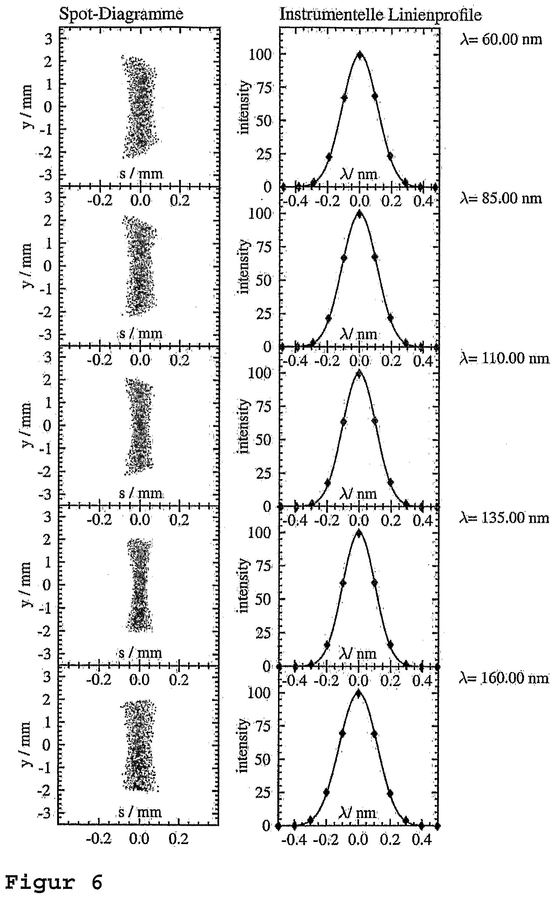

Tabelle 5 zu den Spotdiagrammen und instrumentellen Profilen für die Figur 6:

| Wellenlänge | 60,0 | 85,0 | 110,0 | 135,0 | 160,0 |
|---|---|---|---|---|---|
| optische Linienbreite | 0,1800 | 0,1753 | 0,1535 | 0,1417 | 0,2079 |
| Bandpass-Linienbreite | 0,1854 | 0,1917 | 0,1721 | 0,1609 | 0,2189 |
| Detektierte Linienbreite | 0,2586 | 0,2576 | 0,2451 | 0,2389 | 0,2790 |
| Etendue in $10^{-4}$ [mm$^2$ sr] | 2,0745 | 2,0890 | 2,1036 | 2,1247 | 2,1309 |
| Transmission | 0,65349 | 0,65806 | 0,66266 | 0,66929 | 0,67125 |
| Anteil der ausfallenden Strahlen, die den Detektor in vorgegebener Höhe treffen (TH) | 0,97546 | 0,98487 | 0,99204 | 0,99773 | 0,99968 |

**Patentansprüche**

1. Verfahren zur Ermittlung eines Satzes an Gitterparametern für die holographische Herstellung eines Beugungsgitters, das ein toroidales Gittersubstrat aufweist, für eine VUV-Spektrometerkonfiguration, bei der

   - der zu beobachtende Wellenlängenbereich und
   - die Detektorabmessung vorgegeben sind,

   und wobei der Satz an Gitterparameter neben der vorgegebenen Laserwellenlänge $\lambda_L$ für die holographische Beleuchtung

   - den kleinen und Großen Radius des toroidalen Gittersubstrates ($\rho$ und R),
   - die beiden Abstände der zwei holographischen Beleuchtungspunkte vom Gitterursprung ($r_e$ und $r_d$), und
   - die Winkelstellung der holographischen Beleuchtungspunkte zur Gitternormalen ($\gamma$ und $\delta$) umfasst,

   und wobei als Randbedingung die folgenden Spektrometerparameter zunächst vorgegeben werden

   i. die Abmessungen des Eintrittsspaltes,
   ii. der Abstand $L_A$ des Eintrittsspalts vom Gitterursprung,
   iii. Abstand $R_{so}$ vom Gitterursprung zum meridionalen Fokus nullter Ordnung, wobei die Strichdichte des Gitters 2500 pro mm nicht übersteigt,
   iv. die Ein- und Ausfallwinkel der Strahlung zur Gitternormalen,
   v. die Lage und Winkelstellung des Detektors, wobei Licht erster Ordnung vom Gitter auf den Detektor fällt,
   vi. Breite und Höhe des Beugungsgitters,

   wobei

   a) der große Radius R des toroidalen Gittersubstrats wird aus der meridionale Fokussierungsbedingung nullter Ordnung bestimmt,

b) der kleine Radius $\rho$ des toroidalen Gittersubstrats, die Strichdichte G am Gittermittelpunkt und die Wellenlänge $\lambda_m$ am Detektormittelpunkt werden iterativ über die Gittergleichung sowie über die saggitale Fokussierungsbedingung für die erste Beugungsordnung bestimmt,

c) von den verbleibenden 4 Variablen, nämlich den Abständen der beiden holographischen Belichtungspunkte vom Gitterursprung ($r_e$ und $r_d$), sowie deren Winkelstellungen zur Gitternormalen ($\gamma$ und $\delta$) wird einer der beiden Winkel ($\gamma$) über die Kenntnis der mittleren Strichzahl des Gitters eliminiert,

d) das Minimum der Größe $\Delta\lambda$, der über alle Wellenlängen des zu beobachtenden Wellenlängenbereichs gemittelten Linenbreite am Detektor, einer Funktion von den drei verbleibenden Variablen (Abstände $r_c$, $r_D$ und Winkel $\delta$), wird iterativ bestimmt, wobei der Satz von Variablen $r_c$, $r_D$ und $\delta$ als Lösung angesehen wird, für den $\Delta\lambda$ ein absolutes Minimum annimmt.

2. Verfahren nach Anspruch 1, bei dem auf Basis der ermittelten Gitterparameter und den dabei vorgegebenen Randbedingungen des Spektrometers die mittlere Linienbreite und die effektive Etendue ermittelt werden.

3. Verfahren nach einem der Ansprüche 1 bis 2, bei dem die Schritte a) bis d) für wenigstens zehn verschiedene Konfigurationen an Gitter-und/oder Spaltabmessungen und/oder Armlängen, entsprechend der Punkte i. bis iii. in Anspruch 1, wiederholt werden.

4. Computerprogramm, das in einen Speicher eines digitalen Computers ladbar ist, mit einem Softwarecode zur Durchführung eines Verfahrens nach einem der Ansprüche 1 bis 3.

5. Computersystem mit einem Computerprogramm nach vorhergehendem Anspruch.

6. Verfahren nach einem der Ansprüche 1 bis 3, bei dem die ermittelten Gitterparameter zur Herstellung eines Beugungsgitter verwendet werden.

7. Verfahren zur Herstellung eines Beugungsgitters,

- bei dem die Laserwellenlänge für holographische Beleuchtung mit ($\lambda_L$) = 487, 98 nm festgelegt ist,
- bei dem der Wellenlängenbereich von 2,5 bis 10,5 nm festgesetzt ist, und
- bei dem die folgenden Gitterparameter die über ein Verfahren nach Anspruch 1 bis 3 ermittelt wurden, eingesetzt werden:

    großer Radius des toroidalen Gittersubstats (R) = 6451 mm,
    kleiner Radius des toroidalen Gittersubstats ($\rho$) = 52,0 mm,
    Abstände der Beleuchtungspunkte vom Gitterursprung ($r_c$) = 328 mm, ($r_d$) = 1000 mm,
    Winkelstellung der Beleuchtungspunkte zur Gitternormalen ($\gamma$) = 4,74 und ($\delta$) = 75, 0.

8. Verfahren zur Herstellung eines Beugungsgitters,

- bei dem die Laserwellenlänge für holographische Beleuchtung mit ($\lambda_L$) = 487, 98 nm festgelegt ist,
- bei dem der Wellenlängenbereich von 9 bis 24 nm festgesetzt ist, und
- bei dem die folgenden Gitterparameter die über ein Verfahren nach Anspruch 1 bis 3 ermittelt wurden, eingesetzt werden:

    großer Radius des toroidalen Gittersubstats (R) = 1860 mm,
    kleiner Radius des toroidalen Gittersubstats ($\rho$) = 132,8 mm,
    Abstände der Beleuchtungspunkte vom Gitterursprung ($r_c$) = 327mm, ($r_d$) = 1000mm,
    Winkelstellung der Beleuchtungspunkte zur Gitternormalen ($\gamma$) = -2,65 und ($\delta$) = 75,0,

9. Verfahren zur Herstellung eines Beugungsgitters,

- bei dem die Laserwellenlänge für holographische Beleuchtung mit ($\lambda_L$) = 487, 98 nm festgelegt ist,
- bei dem der Wellenlängenbereich von 20 bis 66 nm festgesetzt ist, und
- bei dem die folgenden Gitterparameter die über ein Verfahren nach Anspruch 1 bis 3 ermittelt wurden, eingesetzt werden:

großer Radius des toroidalen Gittersubstats (R) = 828,2 mm,
kleiner Radius des toroidalen Gittersubstats ($\rho$) = 165,7 mm,
Abstände der Beleuchtungspunkte vom Gitterursprung ($r_c$) = 337mm, ($r_d$) = 1000 mm,
Winkelstellung der Beleuchtungspunkte zur Gitternormalen ($\gamma$) = 19,6 und ($\delta$) = 75, 0.

**10.** Verfahren zur Herstellung eines Beugungsgitters,

- bei dem die Laserwellenlänge für holographische Beleuchtung mit ($\lambda_L$) = 487, 98 nm festgelegt ist,
- bei dem der Wellenlängenbereich von 60 bis 160 nm festgesetzt ist, und
- bei dem die folgenden Gitterparameter die über ein Verfahren nach Anspruch 1 bis 3 ermittelt wurden, eingesetzt werden:

    großer Radius des toroidalen Gittersubstats (R) = 495 mm,
    kleiner Radius des toroidalen Gittersubstats ($\rho$) = 164,2 mm,
    Abstände der Beleuchtungspunkte vom Gitterursprung ($r_c$) = 362 mm, ($r_d$) = 1000 mm,
    Winkelstellung der Beleuchtungspunkte zur Gitternormalen ($\gamma$) = 32,6 und ($\delta$) = 75, 0.


**Claims**

**1.** Method for determining a set of grating parameters for the holographic production of a diffraction grating which has a toroidal grating substrate, for a VUV spectrometer configuration,
in which

    - the wavelength range to be observed and
    - the detector measurement are specified,

and wherein the set of grating parameters comprises, in addition to the specified laser wavelength $\lambda_L$ for the holographic illumination,

    - the small radius and the large radius of the toroidal grating substrate ($\rho$ and R),
    - the two distances of the two holographic illumination points from the grating origin ($r_e$ and $r_d$), and
    - the angular position of the holographic illumination points relative to the grating normal ($\gamma$ and $\delta$),

and wherein the following spectrometer parameters are firstly specified as boundary conditions

    i. the measurements of the inlet gap,
    ii. the distance $L_A$ of the inlet gap from the grating origin,
    iii. distance $R_{so}$ from the grating origin to the meridional focus of zero order, wherein the line density of the grating does not exceed 2500 per mm,
    iv. the incident angle and the angle of reflection of the radiation relative to the grating normal,
    v. the position and angular position of the detector, wherein light of the first order from the grating falls upon the detector,
    vi. width and height of the diffraction grating,

wherein

    a) the large radius R of the toroidal grating substrate is determined from the meridional focus condition of zero order,
    b) the small radius $\rho$ of the toroidal grating substrate, the line density G at the grating centre point and the wavelength $\lambda_m$ at the detector centre point are iteratively determined using the grating equation and using the sagittal focus condition for the first diffraction order,
    c) of the remaining four variables, namely the distances of the two holographic illumination points from the grating origin ($r_e$ and $r_d$) and their angular positions relative to the grating normal ($\gamma$ and $\delta$), one of the two angles ($\gamma$) is eliminated based upon the mean line count of the grating,
    d) the minimum of the value $\Delta\lambda$, the mean line width at the detector over all wavelengths of the wavelength range to be observed, is determined iteratively as a function of the three remaining variables (distances $r_c$, $r_D$ and angle $\delta$), wherein the set of variables $r_c$, $r_D$ and $\delta$ is considered a solution for which $\Delta\lambda$ takes an absolute

minimum.

2. Method according to claim 1, in which, on the basis of the grating parameters obtained and the boundary conditions of the spectrometer specified in this case, the mean line width and effective etendue are obtained.

3. Method according to any of claims 1 to 2, in which the steps a) to d) are repeated for at least ten different configurations of grating and/or gap measurements and/or arm lengths, corresponding to the points i. to iii. in claim 1.

4. Computer program which can be loaded into a memory of a digital computer and has a software code for carrying out a method according to any of claims 1 to 3.

5. Computer system having a computer program according to the preceding claim.

6. Method according to any of claims 1 to 3, in which the grating parameters obtained are used to produce a diffraction grating.

7. Method for producing a diffraction grating

- in which the laser wavelength for the holographic illumination is established at $(\lambda_L)$ = 487,98 nm,
- in which the wavelength range determined is from 2,5 to 10,5 nm, and
- in which the following grating parameters obtained using a method according to claim 1 to 3 are used:

large radius of the toroidal grating substrate (R) = 6451 mm,
small radius of the toroidal grating substrate ($\rho$) = 52,0 mm,
distances of the illumination points from the grating origin $(r_c)$ = 328 mm, $(r_d)$ = 1000 mm,
angular position of the illumination points relative to the grating origin $(\gamma)$ = 4,74 and $(\delta)$ = 75,0.

8. Method for producing a diffraction grating

- in which the laser wavelength for the holographic illumination is established at $(\lambda_L)$ = 487,98 nm,
- in which the wavelength range determined is from 9 to 24 nm, and
- in which the following grating parameters obtained using a method according to claim 1 to 3 are used:

large radius of the toroidal grating substrate (R) = 1860 mm,
small radius of the toroidal grating substrate ($\rho$) = 132,8 mm,
distances of the illumination points from the grating origin $(r_c)$ = 327 mm, $(r_d)$ = 1000 mm,
angular position of the illumination points relative to the grating normal $(\gamma)$ = -2,65 and $(\delta)$ = 75,0.

9. Method for producing a diffraction grating

- in which the laser wavelength for the holographic illumination is established at $(\lambda_L)$ = 487,98 nm.
- in which the wavelength range determined is from 20 to 66 nm, and
- in which the following grating parameters obtained using a method according to claim 1 to 3 are used:

large radius of the toroidal grating substrate (R) = 828,2 mm,
small radius of the toroidal grating substrate ($\rho$) = 165,7 mm,
distances of the illumination points from the grating origin $(r_c)$ = 337 mm, $(r_d)$ = 1000 mm,
angular position of the illumination points relative to the grating origin $(\gamma)$ = 19,6 and $(\delta)$ = 75,0.

10. Method for producing a diffraction grating

- in which the laser wavelength for the holographic illumination is established at $(\lambda_L)$ = 487,98 nm,
- in which the wavelength range determined is from 60 to 160 nm, and
- in which the following grating parameters obtained using a method according to claim 1 to 3 are used:

large radius of the toroidal grating substrate (R) = 495 mm,
small radius of the toroidal grating substrate ($\rho$) = 164,2 mm,
distances of the illumination points from the grating origin $(r_c)$ = 362 mm, $(r_d)$ = 1000 mm,

angular position of the illumination points relative to the grating normal ($\gamma$) = 32,6 and ($\delta$) = 75,0.

**Revendications**

1. Procédé de détermination d'un ensemble de paramètres de réseau pour la production holographique d'un réseau de diffraction qui présente un substrat de réseau toroïdal, pour une configuration de spectromètre VUV, dans lequel

   - la plage de longueurs d'onde à observer et
   - la taille du détecteur sont prédéfinies,

   et dans lequel l'ensemble de paramètres de réseau comprend, en plus de la longueur d'onde laser $\lambda_L$ prédéfinie pour l'éclairage holographique

   - les petit et grand rayons du substrat de réseau toroïdal ($\rho$ et R),
   - les deux distances des deux points d'éclairage holographiques par rapport à l'origine de réseau ($r_e$ et $r_d$), et
   - la position angulaire des points d'éclairage holographiques par rapport à des normales de réseau ($\gamma$ et $\delta$),

   et dans lequel les paramètres de spectromètre suivants sont initialement prédéfinis en tant que condition marginale

   i. les dimensions de la fente d'entrée,
   ii. la distance $L_A$ de la fente d'entrée par rapport à l'origine de réseau,
   iii. distance $R_{so}$ entre origine de réseau et foyer méridional d'ordre zéro, dans lequel la densité de trait ne dépasse pas 2 500 par mm,
   iv. les angles d'entrée et de sortie du rayonnement par rapport aux normales de réseau,
   v. la situation et la position angulaire du détecteur, dans lequel de la lumière d'ordre un en provenance du réseau impacte le détecteur,
   vi. largeur et hauteur du réseau de diffraction,

   dans lequel

   a) le grand rayon R du substrat de réseau toroïdal est déterminé à partir de la condition de focalisation méridionale d'ordre zéro,
   b) le petit rayon $\rho$ du substrat de réseau toroïdal, la densité de trait G au niveau du point médian de réseau et la longueur d'onde $\lambda_m$ au niveau du point médian de détecteur sont déterminés de manière itérative par l'intermédiaire de l'équation de réseau ainsi que par l'intermédiaire de la condition de focalisation sagittale pour le premier ordre de diffraction,
   c) parmi les 4 variables restantes, à savoir les distances des deux points d'éclairage holographiques par rapport à l'origine de réseau ($r_e$ et $r_d$) ainsi que leurs positions angulaires par rapport aux normales de réseau ($\gamma$ et $\delta$), un des deux angles ($\gamma$) est éliminé en s'appuyant sur la connaissance du nombre de traits moyen du réseau,
   d) le minimum de la grandeur $\Delta\lambda$, qui est la largeur de raie au niveau du détecteur moyennée sur toutes les longueurs d'onde de la plage de longueurs d'onde à observer, est déterminé de manière itérative à l'aide d'une fonction des trois variables restantes (distances $r_c$, $r_D$ et angle $\delta$), dans lequel l'ensemble de variables $r_c$, $r_D$ et $\delta$ pour lequel $\Delta\lambda$ admet un minimum absolu est considéré comme une solution.

2. Procédé selon la revendication 1, dans lequel la largeur de raie moyenne et l'étendue effective sont déterminées sur la base des paramètres de réseau déterminés et des conditions marginales du spectromètre qui y sont prédéfinies.

3. Procédé selon l'une des revendications 1 à 2, dans lequel les étapes a) à d) sont répétées pour au moins dix configurations différentes de dimensions de réseau et/ou de dimensions de fente et/ou de longueurs de bras, conformément aux points i. à iii. de la revendication 1.

4. Programme informatique pouvant être chargé dans une mémoire d'un ordinateur numérique, avec un code de logiciel destiné à la mise en œuvre d'un procédé selon l'une quelconque des revendications 1 à 3.

5. Système informatique avec un programme informatique selon la revendication précédente.

**6.** Procédé selon l'une quelconque des revendications 1 à 3, dans lequel les paramètres de réseau déterminés sont utilisés pour la production d'un réseau de diffraction.

**7.** Procédé de fabrication d'un réseau de diffraction,

- dans lequel la longueur d'onde de laser pour l'éclairage holographique est fixée à $(\lambda_L)$ = 487,98 nm,
- dans lequel la plage de longueurs d'onde de 2,5 à 10,5 nm est définie, et
- dans lequel les paramètres de réseau ci-dessous, qui ont été déterminés grâce à un procédé selon les revendications 1 à 3, sont utilisés :

grand rayon du substrat de réseau toroïdal (R) = 6 451 mm,
petit rayon du substrat de réseau toroïdal $(\rho)$ = 52,0 mm,
distances des points d'éclairage par rapport à l'origine de réseau $(r_c)$ = 328 mm, $(r_d)$ = 1 000 mm,
position angulaire des points d'éclairage par rapport aux normales de réseau $(\gamma)$ = 4,74 et $(\delta)$ = 75,0.

**8.** Procédé de production d'un réseau de diffraction,

- dans lequel la longueur d'onde de laser pour l'éclairage holographique est fixée à $(\lambda_L)$ = 487,98 nm,
- dans lequel la plage de longueurs d'onde est fixée entre 9 et 24 nm, et

dans lequel les paramètres de réseau suivants, qui ont été déterminés grâce à un procédé selon les revendications 1 à 3, sont utilisés :

grand rayon du substrat de réseau toroïdal (R) = 1 860 mm,
petit rayon du substrat de réseau toroïdal $(\rho)$ = 132,8 mm,
distances des points d'éclairage par rapport à l'origine de réseau $(r_c)$ = 327 mm, $(r_d)$ = 1 000 mm,
position angulaire des points d'éclairage par rapport aux normales de réseau $(\gamma)$ = -2,65 et $(\delta)$ = 75,0.

**9.** Procédé de production d'un réseau de diffraction,

- dans lequel la longueur d'onde de laser pour l'éclairage holographique est fixée à $(\lambda_L)$ = 487,98 nm,
- dans lequel la plage de longueurs d'onde est fixée entre 20 à 66 nm, et
- dans lequel les paramètres de réseau suivants, qui ont été déterminés grâce à un procédé selon les revendications 1 à 3, sont utilisés :

grand rayon du substrat de réseau toroïdal (R) = 828,2 mm,
petit rayon du substrat de réseau toroïdal $(\rho)$ = 165,7 mm,
distances des points d'éclairage par rapport à l'origine de réseau $(r_c)$ = 337 mm, $(r_d)$ = 1 000 mm,
position angulaire des points d'éclairage par rapport aux normales de réseau $(\gamma)$ = 19,6 et $(\delta)$ = 75,0.

**10.** Procédé de production d'un réseau de diffraction,

- dans lequel la longueur d'onde de laser pour l'éclairage holographique est fixée à $(\lambda_L)$ = 487,98 nm,
- dans lequel la plage de longueurs d'onde est fixée entre 60 et 160 nm, et

dans lequel les paramètres de réseau suivants, qui ont été déterminés grâce à un procédé selon les revendications 1 à 3, sont utilisés :

grand rayon du substrat de réseau toroïdal (R) = 495 mm,
petit rayon du substrat de réseau toroïdal $(\rho)$ = 164,2 mm,
distances des points d'éclairage par rapport à l'origine de réseau $(r_c)$ = 362 mm, $(r_d)$ = 1 000 mm,
position angulaire des points d'éclairage par rapport aux normales de réseau $(\gamma)$ = 32,6 et $(\delta)$ = 75,0.

Beugungsgitter

$L_A$

Eintrittsspalt

$\alpha < 0$    $\beta > 0$

$L_{B1}$

$\Phi$(MCP angle)

$L_{B2}$

$\lambda_1$

Gitter-
Normale

$\lambda_2 > \lambda_1$

Fokalebene (MCP Detektor)

Figur 1

Figur 2

Figur 3

Figur 4

Figur 5

Figur 6

**IN DER BESCHREIBUNG AUFGEFÜHRTE DOKUMENTE**

**In der Beschreibung aufgeführte Patentdokumente**

- DE 1967039

**In der Beschreibung aufgeführte Nicht-Patentliteratur**

- Nearly stigmatic toroidal grazing-incidence spectrometer in the 100-300 Å range. **P. L. HAGELSTEIN.** Applied Optics. Optical Society of America, 01. April 1992, vol. 31, 1464-1471
- Numerical design method for aberration-reduced concave grating spectrometers. **W. R. MCKINNEY et al.** Applied Optics. Optical Society of America, 01. August 1987, vol. 26, 3108-3118
- Diffraction gratings: aberrations and applications. OPTICS AND LASER TECHNOLOGY. Elsevier Science Publishers, 03. April 1999, vol. 31, 195-218
- Technique for narrowband imaging in the far ultraviolet based on aberration-corrected holographic gratings. **WILKINSON et al.** Applied Optics. Optical Society of America, 01. Juli 2001, vol. 40, 3244-3255
- Holographic concave gratings for use with an offplane constant-deviation monochromator. Applied Optics. Optical Society of America, 15. November 1986, vol. 25, 4071-4075